# EUROPEAN PATENT SPECIFICATION

(11) **EP 2 199 342 B1**
(45) Date of publication and mention of the grant of the patent: **30.07.2014**
(21) Application number: 09180170.4
(22) Date of filing: 21.12.2009
(51) Int. Cl.: C08L 69/00, C08L 67/04, C08L 51/00, C08L 51/04, C08L 33/06

(54) **Polylactic acid/polycarbonate resin composition and molded product made using the same**
Polymilchsäure-/Polycarbonatharzzusammensetzung und damit hergestelltes Formprodukt
Composition de résine d'acide polylactique/polycarbonate et produit moulé fabriqué en l'utilisant

(30) Priority: 19.12.2008 KR 20080130527
(43) Date of publication of application: 23.06.2010
(73) Proprietor: CHEIL INDUSTRIES INC., Kumi-city, Kyungsangbuk-do (KR)
(72) Inventor: Lee, Hyung-Tak, Gyeonggi-do (KR); Ha, Doo-Han, Gyeonggi-do (KR); Jung, Chang-Do, Gyeonggi-do (KR); Kwon, Young-Chul, Gyeonggi-do (KR); Cho, Jin-Kyung, Gyeonggi-do (KR); Chung, Young-Mi, Gyeonggi-do (KR); Lee, Byung-Choon, Gyeonggi-do (KR)
(74) Representative: Bublak, Wolfgang

(56) References cited:
- EP-A1- 1 792 941
- EP-A1- 1 865 021
- EP-A1- 2 113 532
- WO-A1-2006/103969
- DE-T5-112005 003 395
- JP-A- 2007 056 247

## Description

This disclosure relates to a polylactic acid/polycarbonate resin composition and a molded product made using the same.

There has been much research on development of strong and safe polymer materials for special purposes. However, as discarded polymers have been socially recognized as a severe environmental problem all over the world, it is required to develop an environmentally-friendly polymer material.

Environmentally friendly polymers may be mainly classified into photodegradable and biodegradable polymers. The biodegradable polymer has a functional group that can be decomposed by microorganisms.

Among these polymers, an aliphatic polyester polymer has gained the most attention, since it has excellent workability and easily adjustable decomposition characteristics. In particular, polylactic acid (PLA) has a market share of about 150,000 tons in the world and expansively covers the field where common plastic is used, for example in food packing materials and containers, cases for electronics, and the like. At present, a polylactic acid resin is mainly used for disposable products such as food containers, wraps, films, and the like due to the biodegradable characteristic. This polylactic acid resin is manufactured by American NatureWorks LLC., and Japan Toyota, and the like.

However, since a conventional polylactic acid resin lacks formability, mechanical strength, and heat resistance, a thin film made therefrom can be easily destroyed. Since it has low resistance against high temperatures, a molded product made therefrom can be distorted at 60°C or higher.

Japanese Patent Laid-Open Publication Nos. 2006-131828 and 2006-199743 disclose a method for improving impact strength and heat resistance by using an impact-reinforcing agent or vinyl-based graft copolymer. However, the disclosed method has a limitation due to an increasing amount of polylactic acid, and particularly heat resistance may not be manifested with heavy load.

Also, Japanese Patent Laid-Open Publication Nos. 2007-231149 and International Patent Laid-Open Publication No. 2006-097979 disclose a method for improving impact strength and heat resistance by using polymethylmethacrylate or acryl-based copolymer. However, this method may not realize high heat resistance because acryl-based copolymer itself has a lower heat resistance than polycarbonate and hinders crystallization of polylactic acid as well.

WO2008102536 A1 discloses resin compositions comprising a polylactic resin (A), polycarbonate resin (B), and a copolymer (C) of methyl-methacrylate and (meth)acrylic acid alkyl ester. The mass ratio of polylactic resin (A) and polycarbonate resin (B) is 40/60-80/20, and the content of (C) is 0.1-20 mass parts with respect to a total of 100 mass parts of (A) and (B). The proportion of the methyl methacrylate component in the monomer components constituting the copolymer (C) is preferably 70 to 90% by mass, and the alkyl group of the methacrylic acid ester may be linear, branched or cyclic.

Thus, it is the object of the present invention to provide a polylactic acid/polycarbonate resin composition having an excellent property balance of heat resistance, Impact strength, and mechanical strength.

Another aspect of the present invention provides a molded product made using the polylactic acid/polycarbonate resin composition.

Above object has been achieved by the provision of a polylactic acid/polycarbonate resin composition is provided that includes (A) a mixed resin including (a1) 10 to 90 wt% of a polycarbonate resin and (a2) 10 to 90 wt% of a polylactic acid resin; and (B) 1 to 20 parts by weight of a modified acryl-based resin based on 100 parts by weight of the mixed resin; wherein the modified acryl-based resin comprises a copolymer of an alkyl(meth)acrylate monomer, and an aromatic or cyclic ester acrylic-based monomer; or a copolymer of an alkyl(meth)acrylate monomer, an aromatic or cyclic ester acryl-based monomer, and a monofunctional unsaturated monomer being polymerizable with the alky(meth)acrylate monomer; or a combination thereof; wherein the alkyl(meth)acrylate monomer is included in an amount of 30 to 50 wt% based on the total weight of the modified acryl-based resin (B).

The polycarbonate resin may be prepared by reacting diphenols with a compound of phosgene, halogen formate, carbonate ester, or a combination thereof.

The polylactic acid resin includes a repeating unit derived from L-lactic acid, D-lactic acid, L,D-lactic acid, or a combination thereof.

The modified acryl-based resin may be a copolymer of an alkyl(meth)acrylate monomer; an aromatic or cyclic ester acryl-based monomer; and optionally a monofunctional unsaturated monomer being polymerizable with the alkyl(meth)acrylate monomer.

The aromatic or cyclic ester acryl-based monomer includes cyclohexyl(meth)acrylate, 2-ethylphenoxy(meth)acrylate, 2-ethylthiophenyl(meth)acrylate, 2-ethylaminophenyl(meth)acrylate, phenyl(meth)acrylate, benzyl(meth)acrylate, 2-phenylethyl(meth)acrylate, 3-phenylpropyl(meth)acrylate, 4-phenylbutyl(meth)acrylate, 2-(2-methylphenyl)ethyl(meth)acrylate, 2-(3-methylphenyl)ethyl(meth)acrylate, 2-(4-methylphenyl)ethyl(meth)acrylate, 2-(4-propylphenyl)ethyl(meth)acrylate, 2-(4-(1-methylethyl)phenyl)ethyl(meth)acrylate, 2-(4-methoxyphenyl)ethyl(meth)acrylate, 2-(4-cyclohexylphenyl)ethyl(meth)acrylate, 2-(2-chlorophenyl)ethyl(meth)acrylate, 2-(3-chlorophenyl)ethyl(meth)acrylate, 2-(4-chlorophenyl)ethyl(meth)acrylate, 2-(4-bromophenyl)ethyl(meth)acrylate, 2-(3-phenylphenyl)ethyl(meth)acrylate, 2-(4-benzylphenyl)ethyl(meth)acrylate, or combination thereof. The monofunctional unsaturated monomer being polymerizable with the alkyl(meth)acrylate monomer includes styrenes, nitriles, unsaturated carboxylic acid, acid anhydride, hydroxyl-containing acrylates, amides, allylglycidyl ether, glycidyl methacrylate, or a combination thereof. The alkyl(meth)acrylate monomer is included in an amount of 30 to 50 wt% based on the total weight of the modified acryl-based resin (B).

The polylactic acid/polycarbonate resin composition further includes about 1 to about 20 parts by weight of (C) an impact-reinforcing agent based on 100 parts by weight of the mixed resin. The impact-reinforcing agent comprises a core-shell copolymer obtained by grafting a unsaturated compound of an acryl-based monomer, a hetero cyclic monomer, an aromatic vinyl monomer, an unsaturated nitrile monomer, or a combination thereof, onto a rubber polymer obtaining by polymerization of a diene-based monomer, an acryl-based monomer, a silicon-based monomer, or a combination thereof.

According to another aspect of this disclosure, a molded product made from the polylactic acid/polycarbonate resin composition is provided.

Hereinafter, further aspects of the present invention will be described in detail.

Exemplary embodiments will hereinafter be described in detail.
However, these embodiments are only exemplary, and the present invention is not limited thereto.

As used herein, when specific definition is not provided, the term "polylactic acid/polycarbonate resin" refers to "polylactic acid resin and polycarbonate resin".

As used herein, when specific definition is not provided, the term "(meth)acrylate" refers to "acrylate" and "methacrylate".

As used herein, when a specific definition is not otherwise provided, the term "substituted" refers to one substituted with a C1 to C20 alkyl, a C1 to C20 alkoxy, or a C6 to C30 aryl, halogen atom. Also, if there no specific mention in the present specification, "hetero cyclic monomer" signifies a structure with a hetero atom of N, O, S or P in a cyclic compound.

The polylactic acid/polycarbonate resin composition according to one embodiment includes (A) a mixed resin including (a1) polycarbonate resin and (a2) a polylactic acid resin, and (B) a modified acryl-based resin.

Exemplary components included in the polylactic acid/polycarbonate resin composition according to embodiments will hereinafter be described in detail. However, these embodiments are only exemplary, and this disclosure is not limited thereto.

### (A) Mixed Resin

### (a1) Polycarbonate Resin

The polycarbonate resin may be prepared by reacting diphenols of the following Chemical Formula 1 with a compound of phosgene, halogenic acid ester, carbonate ester, or a combination thereof.

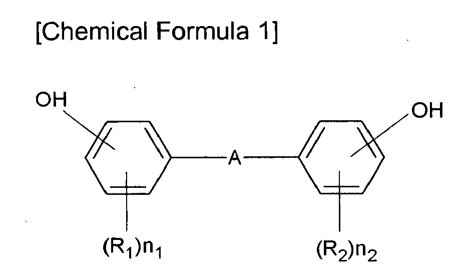

In the above Chemical Formula 1,
A is a linker selected from the group consisting of a single bond, a substituted or unsubstituted C1 to C30 linear or branched alkylene, a substituted or unsubstituted C2 to C5 alkenylene, a substituted or unsubstituted C2 to C5 alkylidene, a substituted or unsubstituted C1 to C30 linear or branched haloalkylene, a substituted or unsubstituted C5 to C6 cycloalkylene, a substituted or unsubstituted C5 to C6 cycloalkenylene, a substituted or unsubstituted C5 to C10 cycloalkylidene, a substituted or unsubstituted C6 to C30 arylene, a substituted or unsubstituted C1 to C20 linear or branched alkoxylene, a halogen acid ester, a carbonate ester, CO, S, and SO₂,
each of R₁ and R₂ is independently selected from the group consisting of a substituted or unsubstituted C1 to C30 alkyl, and a substituted or unsubstituted C6 to C30 aryl, and
n₁ and n₂ are independently integers ranging from 0 to 4.

The term "substituted" refers to one substituted with a halogen, a C1 to C30 alkyl, a C1 to C30 haloalkyl, a C6 to C30 aryl, a C1 to C20 alkoxy, or a combination thereof.

The diphenols represented by the above Chemical Formula 1 may be used in combinations to constitute repeating units of the polycarbonate resin. The diphenols include hydroquinone, resorcinol, 4,4'-dihydroxydiphenyl, 2,2-bis(4-hydroxyphenyl)propane (referred to as "bisphenol-A"), 2,4-bis(4-hydroxyphenyl)-2-methylbutane, bis(4-hydroxyphenyl)methane, 1,1-bis(4-hydroxyphenyl)cyclohexane, 2,2-bis(3-chloro-4-hydroxyphenyl)propane, 2,2-bis(3,5-dimethyl-4-hydroxyphenyl)propane, 2,2-bis(3,5-dichloro-4-hydroxyphenyl)propane, 2,2-bis(3,5-dibromo-4-hydroxyphenyl)propane, bis(4-hydroxyphenyl)sulfoxide, bis(4-hydroxyphenyl)ketone, bis(4-hydroxyphenyl)ether. In one embodiment, 2,2-bis(4-hydroxyphenyl)-propane, 2,2-bis(3,5-dichloro-4-hydroxyphenyl)-propane, or 1,1-bis(4-hydroxyphenyl)-cyclohexane of the diphenols may be preferable. In another embodiment, 2,2-bis(4-hydroxyphenyl)-propane may be more preferable.

In one embodiment, the polycarbonate resin has a weight average molecular weight ranging from 10,000 to 200,000 g/mol, and in another embodiment, it has a weight average molecular weight ranging from 15,000 to 80,000 g/mol.

The polycarbonate resin may be a mixture of copolymers obtained using two or more diphenols that are different from each other. The polycarbonate resin may be a linear polycarbonate resin, a branched polycarbonate resin, a polyester carbonate copolymer.

The linear polycarbonate resin may include a bisphenol-A-based polycarbonate resin. The branched polycarbonate resin may be produced by reacting a multi-functional aromatic compound such as trimellitic anhydride, trimellitic acid, with diphenols and a carbonate. The multi-functional aromatic compound may be included in an amount of 0.05 to 2 mol% based on the total weight of the branched polycarbonate resin. The polyester carbonate copolymer resin may include one produced by reacting a difunctional carboxylic acid with diphenols and a carbonate. The carbonate may include a diaryl carbonate such as diphenyl carbonate, and ethylene carbonate.

The polycarbonate resin may be included in an amount of 10 to 90 wt%, and in one embodiment, 20 to 60 wt% based on the total weight of the mixed resin including the polycarbonate resin and polylactic acid resin. When the polycarbonate resin is included within the range, excellent heat resistance and Impact strength may be obtained and environmentally-friendly effect can be expected.

### (a2) Polylactic Acid Resin

In general, a polylactic acid resin is a commercially-available polyester-based resin made by using lactic acid obtained by decomposing corn starch of biomass energy as a monomer.

The polylactic acid resin includes a repeating unit derived from a lactic acid of an L-lactic acid, a D-lactic acid, an L,D-lactic acid, or combinations thereof.

The polylactic acid resin may include a repeating unit derived from an L-lactic acid in an amount of 95 wt% or more in terms of balance between heat resistance and formability. In one embodiment, the polylactic acid resin may include a repeating unit derived from an L-lactic acid in an amount of 95 wt% to 100 wt% and the repeating unit derived from a D-lactic acid in an amount of 0 wt% to 5 wt%. In one embodiment, the polylactic acid resin may include the repeating unit derived from an L-lactic acid in an amount of 98 to 99.99 wt% and the repeating unit derived from a D-lactic acid in an amount of 0.01 to 2 wt%. When the polylactic acid resin is included as above, excellent hydrolysis resistance as well as balance between heat resistance and formability may be obtained.

In addition, the polylactic acid resin has no specific limit of molecular weight or molecular weight distribution, as long as it can be molded. However, in one embodiment, the polylactic acid resin has a weight average molecular weight of more than 80,000 g/mol, and in another embodiment, 80,000 to 300,000 g/mol. When the polylactic acid resin has a weight average molecular weight within the above range, molded products with balanced mechanical strength and heat resistance may be provided.

The polylactic acid resin includes one selected from the group consisting of a polylactic acid homopolymer, a polylactic acid copolymer, and combinations thereof.

The polylactic acid homopolymer may be prepared through ring-opening polymerization of a lactic acid of the L-lactic acid, the D-lactic acid, or combinations thereof.

The polylactic acid copolymer may be a random or block copolymer with a component that is capable of being copolymerized with the polylactic acid polymer. The component that is capable of being copolymerized with the polylactic acid polymer may include a compound having at least two functional groups being capable of ester-bonding inside the molecule.

The compound having at least two functional groups being capable of ester-bonding inside the molecule includes (i) a dicarboxylic acid, (ii) polyhydric alcohols, (iii) a hydroxy carboxylic acid excluding lactic acid, (d) a lactone, (iv) a polyester, a polyether, a polycarbonate, which are derived from the above compound.

The dicarboxylic acid (i) includes a C4 to C50 linear or branched saturated or unsaturated aliphatic dicarboxylic acid, a C8 to C20 aromatic dicarboxylic acid, a polyether dicarboxylic acid.

Herein, the aliphatic dicarboxylic acid may include succinic acid, adipic acid, sebacin acid, decane dicarboxylic acid. The aromatic dicarboxylic acid may include phthalic acid, terephthalic acid, isophthalic acid. The polyether dicarboxylic acid may include a carboxyl methyl group at both ends of a polyalkylene ether such as polyethylene glycol, polypropylene glycol, polybutylene glycol, polyethylene polypropylene glycol.

The polyhydric alcohol (ii) includes aliphatic polyols, aromatic polyhydric alcohols, polyalkylene ethers.

Aliphatic polyols includes C2 to C50 aliphatic polyols including 2 to 4 hydroxy groups such as butane diol, hexane diol, octane diol, decane diol, 1,4-cyclohexanedimetanol, glycerine, sorbitan, trimethylolpropane, neopentyl glycol, may be used.

In addition, the aromatic polyhydric alcohols may include C6 to C20 aromatic diols such as bis-hydroxy methyl benzene, hydroquinone and aromatic diols prepared by additionally reacting a C2 to C4 alkylene oxide such as ethylene oxide, propylene oxide, butylene oxide, with bisphenols such as bisphenol A, bisphenol F.

The polyalkylene ethers may include ether glycols such as polyethylene glycol, polypropylene glycol.

The hydroxy carboxylic acid (iii) excluding lactic acid may include a C3 to C10 hydroxy carboxylic acid such as glycolic acid, hydroxy butyl carboxylic acid, 6-hydroxy caproic acid.

Examples of the lactone (iv) include glycolide, ε -caprolactone glycolide, ε-caprolactone, β-propinolactone, δ-butyrolactone, β-butyrolactone, γ -butyrolactone, δ-valerolactone.

For the polyester, polyether, or polycarbonate (v), a generally used one for preparing a lactic acid copolymer may be used without limitation, and in one embodiment, polyester may be used.

The polyester may include an aliphatic polyester prepared from an aliphatic dicarboxylic acid and an aliphatic diol.

The aliphatic dicarboxylic acid may include succinic acid, adipic acid, sebacin acid, decanedicarboxylic acid. The aliphatic diol may include a C2 to C20 aliphatic diol ethylene glycol, propane diol, butane diol, hexane diol, octane diol, a polyalkylene ether (homopolymer or copolymer) such as polyethylene glycol, polypropylene glycol, polybutylene glycol, and polyalkylene carbonate.

The polylactic acid resin may be included in an amount of 10 to 90 wt% based on the total amount of the mixed resin of the polycarbonate resin and polylactic acid resin. In one embodiment, it may be included in an amount of 20 to 80 wt% based on the total amount of the mixed resin of the polycarbonate resin and polylactic acid resin. When it is included within the above range, excellent heat resistance and mechanical strength may be obtained, and the environmentally-friendly effect is improved.

### (B) Modified Acryl-Based Resin

The modified acryl-based resin is a copolymer formed of an alkyl(meth)acrylate monomer and an aromatic or cyclic ester acryl-based monomer or a copolymer formed of an alkyl(meth)acrylate monomer; an aromatic or cyclic ester acryl-based monomer and a monofunctional unsaturated monomer capable of being copolymerized with an alkyl(meth)acrylate monomer, or a combination thereof.

As for the alkyl(meth)acrylate monomer, an alkylmethacrylate such as methylmethacrylate, ethylmethacrylate, propylmethacrylate, and butylmethacrylate; or an alkylacrylate such as methylacrylate, ethylacrylate, propylacrylate, butylacrylate, and 2-ethylhexylacrylate may be used. The alkyl refers to a C1 to C10 alkyl.

The aromatic ester acrylic based monomer may be acrylic based monomer including substituted or non-substituted C6 to C30 aryl, and the cyclic ester acrylic based monomer may be acrylic based monomer including substituted or non-substituted C3 to C20 cycloalkyl, substituted or non-substituted C3 to C20 cycloalkenyl, or substituted or non-substituted C3 to C20 cycloalkynyl. The aromatic or cyclic ester acryl-based monomer includes cyclohexyl(meth)acrylate, 2-ethylphenoxy(meth)acrylate, 2-ethylthiophenyl(meth)acrylate, 2-ethylaminophenyl(meth)acrylate, phenyl(meth)acrylate, benzyl(meth)acrylate, 2-phenylethyl(meth)acrylate, 3-phenylpropyl(meth)acrylate, 4-phenylbutyl(meth)acrylate, 2-(2-methylphenyl)ethyl(meth)acrylate, 2-(3-methylphenyl)ethyl(meth)acrylate, 2-(4-methylphenyl)ethyl(meth)acrylate, 2-(4-propylphenyl)ethyl(meth)acrylate, 2-(4-(1-methylethyl)phenyl)ethyl(meth)acrylate, 2-(4-methoxyphenyl)ethyl(meth)acrylate, 2-(4-cyclohexylphenyl)ethyl(meth)acrylate, 2-(2-chlorophenyl)ethyl(meth)acrylate, 2-(3-chlorophenyl)ethyl(meth)acrylate, 2-(4-chlorophenyl)ethyl(meth)acrylate, 2-(4-bromophenyl)ethyl(meth)acrylate, 2-(3-phenylphenyl)ethyl(meth)acrylate, 2-(4-benzylphenyl)ethyl(meth)acrylate or a combination thereof, but is not limited thereto.

As for the monofunctional unsaturated monomer that may be copolymerized with the alkyl(meth)acrylate monomer may be selected from the group consisting of styrenes such as styrene and α-methylstyrene; nitriles such as acrylonitrile, methacrylonitrile, and ethacrylonitrile; unsaturated carboxylic acid such as acrylic acid and methacrylic acid; acid anhydride such as maleic anhydride; hydroxy-containing acrylate such as 2-hydroxyethylacrylate, 2-hydroxypropylacrylate, and monoglycerolacrylate; amides such as acrylamide and methacrylamide; allylglycidylether; glycidylmethacrylate; and a combination thereof.

Non-limiting examples of the modified acryl-based resin according to one embodiment include a copolymer formed of an alkylmethacrylate monomer and a styrene and a nitrile.

The alkyl(meth)acrylate monomer is included in an amount ranging from 30 wt% to 50 wt%, based on the total quantity of a monomer constituting the modified acryl-based resin (B). When the alkyl(meth)acrylate monomer is included within the range, the heat resistance and appearance characteristics are excellent.

The modified acryl-based resin according to one embodiment may be polymerized through a typical massive polymerization, an emulsion polymerization or a suspension polymerization.

The modified acryl-based resin prepared according to the method has a higher refractive index than a typical acryl-based resin such as polymethylmethacrylate. In short, the modified acryl-based resin according to one embodiment may have a refractive index ranging from 1.50 to 1.58. When the modified acryl-based resin has a refractive index of the range, the compatibility and transparency are improved so that when it is blended with polycarbonate resin, it is kneaded well, and thus the impact resistance and the heat resistance of the polylactic acid/polycarbonate resin composition may be improved.

The weight average molecular weight of the modified acryl-based resin may range from 5,000 to 200,000 g/mol. When the modified acryl-based resin has a weight average molecular weight of the range, carbonization or decomposition does not occur during the compounding, and an excellent compatibility with polycarbonate resin is acquired as well as excellent transparency.

The modified acryl-based resin may be included in an amount ranging from 1 part by weight to 20 parts by weight, in particular, from 5 parts by weight to 15 parts by weight, based on 100 parts by weight of the mixed resin including the polycarbonate resin and polylactic acid resin. When the modified acryl-based resin is included in an amount of the above range, it is possible to acquire excellent compatibility with polycarbonate resin, impact resistance and heat resistance.

### (C) Impact-Reinforcing Agent

The polylactic acid/polycarbonate resin composition may further include an impact-reinforcing agent.

The impact-reinforcing agent has a core-shell structure where unsaturated monomers are grafted into a rubber core to form a hard shell. The impact-reinforcing agent is a core-shell type copolymer obtained by grafting a unsaturated compound of an acryl-based monomer, a hetero cyclic monomer, an aromatic vinyl monomer, an unsaturated nitrile monomer, or a combination thereof, onto a rubber polymer obtaining by polymerization of a diene-based monomer, an acryl-based monomer, a silicon-based monomer, or a combination thereof.

The diene-based monomer includes C4 to C6 butadiene, isoprene. In one embodiment, butadiene is preferable. The rubber polymer that is obtained from polymerization of the diene-based monomer includes a butadiene rubber, an acryl rubber, a styrene/butadiene rubber, an acrylonitrile/butadiene rubber, an isoprene rubber, a terpolymer (EPDM) of ethylene-propylene-diene.

The acryl-based monomer includes methyl(meth)acrylate, ethyl(meth)acrylate, n-propyl(meth)acrylate, n-butyl(meth)acrylate, hexyl(meth)acrylate, 2-ethylhexyl(meth)acrylate, and the like. Curing agents such as ethyleneglycol di(meth)acrylate, propyleneglycol di(meth)acrylate, 1,3-butyleneglycol di(meth)acrylate, 1,4-butyleneglycol di(meth)acrylate, allyl(meth)acrylate, triallylcyanurate, may be used along with the acryl-based monomer.

The silicon-based monomer includes a cyclosiloxane compound of hexamethylcyclotrisiloxane, octamethylcyclotetrasiloxane, decamethylcyclopentasiloxane, dodecamethylcyclohexasiloxane, trimethyltriphenylcyclotrisiloxane, tetramethyltetraphenylcyclotetrasiloxane, octaphenylcyclotetrasiloxane, or a combination thereof.

Curing agents such as trimethoxymethylsilane, triethoxyphenylsilane, tetramethoxysilane, tetraethoxysilane, may be used along with the silicon-based monomer.

The rubber polymer has an average particle diameter ranging from 0.4 µm to 1 µm in terms of balance of impact resistance and coloring properties.

The acryl-based monomer of the unsaturated compound may include (meth)acrylic acid an alkyl ester, (meth)acrylic acid ester, or a combination thereof. The alkyl is a C1 to C10 alkyl. The (meth)acrylic acid alkyl ester includes methyl(meth)acrylate, ethyl(meth)acrylate, propyl(meth)acrylate, butyl(meth)acrylate, and in one embodiment, methyl(meth)acrylate is preferable. Exemplary (meth)acrylic acid esters include without limitation (meth)acrylate.

The heterocyclic monomer may be substituted or non-substituted C2 to C20 cycloalkyl compound, substituted or non-substituted C2 to C20 cycloalkenyl compound, or substituted or non-substituted C2 to C20 cycloalkynyl compound. The hetero cyclic monomer may include maleic anhydride, alkyl or phenyl N-substituted maleimide.

The aromatic vinyl monomer includes styrene, C1-C10 alkylsubstituted styrene, halogen-substituted styrene, or a combination thereof. The alkyl substituted styrene includes o-ethyl styrene, m-ethyl styrene, p-ethyl styrene, α-methyl styrene.

The unsaturated nitrile monomer includes acrylonitrile, methacrylonitrile, ethacrylonitrile, or a combination thereof.

Non-limiting examples of a polymer formed of at least one monomer among the unsaturated compounds include polymethylmethacrylate.

The copolymer of a core-shell structure may have an average particle size ranging from 0.1 µm to 0.5 µm. When the copolymer has an average particle size of the above range, the copolymer may be dispersed well into the matrix of the polylactic acid resin, and when an external impact is applied, the impact is easily absorbed to thereby have an impact-reinforcement effect increased.

The copolymer of the core-shell structure may include the rubber polymer in an amount ranging from 50 wt% to 90 wt% and an unsaturated compound grafted thereto in an amount ranging from about 10 wt% to 50 wt%. When the copolymer of the core-shell structure includes the components in the above ratio, the compatibility with the polylactic acid resin becomes excellent to thereby maximize the impact-reinforcement effect.

The impact-reinforcing agent may be included in an amount ranging from 1 part by weight to 20 parts by weight, in particular, from 3 to 10 parts by weight, based on 100 parts by weight of the mixed resin including the polycarbonate resin and polylactic acid resin. When the impact-reinforcing agent is included in an amount of the above range, it is possible to acquire impact reinforcement and heat resistance increase effects and improve mechanical strength such as tensile strength, flexural strength, and flexural modulus.

### (D) Other Additive

The polylactic acid/polycarbonate resin composition according to one embodiment may further an additive.

The additive may include one selected from the group consisting of an anti-hydrolysis agent, a flame retardant, flame-retardant aid, an organic or inorganic reinforcing agent, an antibacterial agent, a heat stabilizer, an antioxidant, a release agent, a light stabilizer, compatibilizer, an inorganic material additive, a surfactant, a coupling agent, a plasticizer, an admixture, a stabilizer, a lubricant, an antistatic agent, a flame proofing agent, a weather-resistance agent, a colorant, an ultraviolet (UV) blocking agent, a filler, a nucleating agent, an adhesion aid, an adhesive, and a mixture thereof.

The antioxidants may include phenol-type, phosphite-type, thioether-type, or amine-type antioxidants. The releasing agents may include a fluorine-containing polymer, silicone oil, a metal salt of stearic acid, a metal salt of montanic acid, a montanic acid ester wax, or a polyethylene wax. In addition, the weather-resistance agent may include benzophenone- type or an amine-type weather-resistance agent. The colorant may include a dye or a pigment. The ultraviolet (UV) blocking agent may include titanium oxide (TiO₂) or carbon black. The filler may include a glass fiber, a carbon fiber, silica, mica, alumina, clay, calcium carbonate, calcium sulfate, or glass beads. When the fillers are added, properties such as mechanical strength, heat resistance, and the like may be improved. In addition, the nucleating agents may include talc or clay.

The additive may be include in an amount of 0.1 part by weight to 30 parts by weight based on 100 parts by weight of the mixed resin including 100 parts by weight of the mixed resin including the polycarbonate resin and polylactic acid resin. When the additive is included within the above range, addition effect of each additive may be realized and excellent mechanical strength and improved surface appearance may be obtained.

In short, the polylactic acid/polycarbonate resin composition according to one embodiment may be prepared by mixing and processing a polycarbonate resin, a polylactic acid resin, a modified acryl-based resin and an impact-reinforcing agent together. In other words, according to one embodiment, a polycarbonate resin, a polylactic acid resin, a modified acryl-based resin and an impact-reinforcing agent may be simultaneously mixed, or a master batch may be prepared by mixing the polylactic acid and the impact-reinforcing agent and used.

When the master batch is prepared and used, the viscosity difference between the polycarbonate resin and the polylactic acid resin may be reduced as the fluidity of the polylactic acid resin having a lower viscosity than the polycarbonate resin is decreased by an impact-reinforcing agent.

Also, pellets may be fabricated through a widely known method by using the polylactic acid/polycarbonate resin composition according to one embodiment. For example, the constituent components of the polylactic acid/polycarbonate resin composition may be mixed with an additive and melt-extruded in an extruding machine to thereby fabricate the pellets.

According to another embodiment, a molded product is manufactured by molding the polylactic acid/polycarbonate resin composition. The polylactic acid/polycarbonate resin composition may be usefully applied to molded products of the areas where heat resistance, impact strength and mechanical strength are regarded important and required, such as automobiles, mechanical parts, electronic parts, communication equipment, office equipment, and general merchandise.

The following examples illustrate this disclosure in more detail.
However, they are exemplary embodiments and are not limiting.

### [Examples]

Each component of polylactic acid/polycarbonate resin composition is as follows.
(A) Mixed Resin
(a1) Polycarbonate Resin

PANLITE L 1225WX produced in TEIJIN CHEMICALS LTD., Japan, is used.
(a2) Polylactic Acid Resin

4032D produced in NatureWorks LLC company, the U.S., is used.
(B) Modified Acryl-Based Resin
(b1) A copolymer prepared by emulsion-polymerizing a styrene monomer, an acrylonitrile monomer and a methylmethacrylate monomer is used,
(b2) A copolymer prepared by emulsion-polymerizing a phenyl methacrylate monomer and a methylmethacrylate monomer is used.
(B') Acryl-Based Resin

As for a polymethylmethacrylate resin, L-84 produced by Mitsubishi Rayon Co., Japan, is used.
(C) Impact-Reinforcing Agent

METABLENE S-2100 produced by Mitsubishi Rayon Co., Japan, is used.

### Examples 1 to 6 and Comparative Examples 1 to 3

Pellets are fabricated by extruding a composition of the above-mentioned components in the amounts presented in the following Table 1 with an extruding machine having a feed rate of about 40kg/hr, a screw RPM of about 240, a temperature of about 200°C to about 250°C, a screw configuration of about 45 Ø Regular, and L/D=36.

### [Experimental Examples]

Physical specimens are prepared by drying the pellets prepared according to Examples 1 to 6 and Comparative Examples 1 to 3 at about 80°C for about 4 hours, using an injection molding machine with an injection molding capacity of about 6 oz, setting a cylinder temperature at about 210°C to about 230°C, a metallic molding temperature at about 100°C, and a molding cycle time at about 30 seconds, and injection-molding ASTM dumbbell specimens. The physical properties of the prepared physical specimens are measured in the following method and the result is shown in the following Table 1.
(1) Thermal distortion temperature (HDT): measured according to ASTM D648.
(2) Izod Impact strength: measured according to ASTM D256A.
(3) Flexural strength: measured according to ASTM D790.
(4) Flexural modulus: measured according to ASTM D790.
(5) Tensile strength: measured according to ASTM D638.

**Table 1**

| | | unit | Example | | | | | | Comparative Example | | |
|---|---|---|---|---|---|---|---|---|---|---|---|
| | | | 1 | 2 | 3 | 4 | 5 | 6 | 1 | 2 | 3 |
| (A) mixed resin | (a1) polycarbonate resin | wt% | 60 | 60 | 60 | 50 | 50 | 50 | 50 | 60 | 50 |
| | (a2) polylactic acid resin | wt% | 30 | 30 | 25 | 45 | 40 | 35 | 25 | 30 | 40 |
| (B) modified acryl-based resin | (b1) | wt% | 10 | 10 | - | 5 | 10 | - | 30 | - | - |
| | (b2) | wt% | - | - | 15 | - | - | 15 | - | - | - |
| (B') acryl-based resin (polymethylmethacrylate) | | wt% | - | - | - | - | - | - | - | 10 | 10 |
| (C) impact-reinforcing agent | | parts by weight* | - | 5 | 10 | - | 15 | 10 | - | 10 | 15 |
| thermal distortion temperature (18.5 kgf) | | °C | 125 | 115 | 110 | 100 | 91 | 90 | 76 | 80 | 65 |
| 1/8" Izod Impact strength | | kgf·cm/ cm | 21 | 55 | 65 | 20 | 75 | 57 | 5 | 52 | 50 |
| flexural strength | | kgf/cm² | 880 | 860 | 840 | 900 | 850 | 870 | 700 | 820 | 750 |
| flexural modulus | | kgf/cm² | 24000 | 23000 | 22000 | 25000 | 23000 | 23000 | 19000 | 22000 | 20000 |
| tensile strength | | kgf/cm² | 580 | 560 | 570 | 580 | 600 | 590 | 550 | 560 | 570 |

| | | | | | | | | | | | |
|---|---|---|---|---|---|---|---|---|---|---|---|
| * parts by weight is a unit indicating an amount by taking the total amount of (A) mixed resin and (B) modified acryl-based resin or (B') acryl-based resin as 100 parts by weight. | | | | | | | | | | | |

It may be seen from Table 1 that the compositions prepared according to Examples 1 to 6 have excellent physical property balance, such as heat resistance, impact resistance and mechanical strength, e.g., flexural strength, flexural modulus and tensile strength.

Meanwhile, the composition prepared according to Comparative Example 1 including the modified acryl-based resin out of the amount range suggested in one embodiment, the impact resistance is remarkably deteriorated. Also, the compositions of Comparative Examples 2 and 3 including polymethylmethacrylate instead of modified acryl-based resin have deteriorated heat resistance and mechanical strength.

While this disclosure has been described in connection with what is presently considered to be practical exemplary embodiments, it is to be understood that this disclosure is not limited to the disclosed embodiments, but, on the contrary, is intended to cover various modifications and equivalent arrangements included within the scope of the appended claims. Therefore, the aforementioned embodiments should be understood to be exemplary but not limiting the present invention in any way.

## Claims

1. A polylactic acid/polycarbonate resin composition comprising
(A) a mixed resin including (a1) 10 to 90 wt% of a polycarbonate resin and (a2) 10 to 90 wt% of a polylactic acid resin; and
(B) 1 to 20 parts by weight of a modified acryl-based resin based on 100 parts by weight of the mixed resin; wherein the modified acryl-based resin comprises a copolymer of an alkyl(meth)acrylate monomer, and an aromatic or cyclic ester acrylic-based monomer; or a copolymer of an alkyl(meth)acrylate monomer, an aromatic or cyclic ester acryl-based monomer, and a monofunctional unsaturated monomer being polymerizable with the alkyl(meth)acrylate monomer; or a combination thereof; wherein the alkyl(meth)acrylate monomer is included in an amount of 30 to 50 wt% based on the total weight of the modified acryl-based resin (B).

2. The polylactic acid/polycarbonate resin composition of claim 1, wherein the polycarbonate resin is prepared by reacting diphenols with a compound of phosgene, halogen formate, carbonate ester, or a combination thereof.

3. The polylactic acid/polycarbonate resin composition of claim 1 or 2, wherein the polylactic acid resin comprises a repeating unit derived from L-lactic acid, D-lactic acid, L,D-lactic acid, or a combination thereof.

4. The polylactic acid/polycarbonate resin composition of claim 1, wherein the aromatic or cyclic ester acryl-based monomer comprises cyclohexyl(meth)acrylate, 2-ethylphenoxy(meth)acrylate, 2-ethylthiophenyl(meth)acrylate, 2-ethylaminophenyl(meth)acrylate, phenyl(meth)acrylate, benzyl(meth)acrylate, 2-phenylethyl(meth)acrylate, 3-phenylpropyl(meth)acrylate, 4-phenylbutyl(meth)acrylate, 2-(2-methylphenyl)ethyl(meth)acrylate, 2-(3-methylphenyl)ethyl(meth)acrylate, 2-(4-methylphenyl)ethyl(meth)acrylate, 2-(4-propylphenyl)ethyl(meth)acrylate, 2-(4-(1-methylethyl)phenyl)ethyl(meth)acrylate, 2-(4-methoxyphenyl)ethyl(meth)acrylate, 2-(4-cyclohexylphenyl)ethyl(meth)acrylate, 2-(2-chlorophenyl)ethyl(meth)acrylate, 2-(3-chlorophenyl)ethyl(meth)acrylate, 2-(4-chlorophenyl)ethyl(meth)acrylate, 2-(4-bromophenyl)ethyl(meth)acrylate, 2-(3-phenylphenyl)ethyl(meth)acrylate, 2-(4-benzylphenyl)ethyl(meth)acrylate, or a combination thereof.

5. The polylactic acid/polycarbonate resin composition of claim 1, wherein the monofunctional unsaturated monomer being polymerizable with the alkyl(meth)acrylate monomer comprises styrenes, nitriles, unsaturated carboxylic acid, acid anhydride, hydroxyl-containing acrylates, amides, allylglycidylether, glycidylmethacrylate, or a combination thereof.

6. The polylactic acid/polycarbonate resin composition of any of claims 1 to 5, wherein the polylactic acid/polycarbonate resin composition further comprises 1 to 20 parts by weight of (C) an impact-reinforcing agent based on 100 parts by weight of the mixed resin.

7. The polylactic acid/polycarbonate resin composition of claim 6, wherein the impact-reinforcing agent comprises a core-shell copolymer obtained by grafting a unsaturated compound of an acryl-based monomer, a hetero cyclic monomer, an aromatic vinyl monomer, an unsaturated nitrile monomer, or a combination thereof, onto a rubber polymer obtaining by polymerization of a diene-based monomer, an acryl-based monomer, a silicon-based monomer, or a combination thereof.

8. A molded product obtainable from the polylactic acid/polycarbonate resin composition according to any one of claims 1 to 7.

## Patentansprüche

1. Polymilchsäure/Polycarbonat-Harz-Zusammensetzung, umfassend
(A) ein gemischtes Harz, das (a1) 10 bis 90 Gew.-% eines Polycarbonatharzes und (a2) 10 bis 90 Gew.-% eines Polymilchsäureharzes einschließt; und
(B) 1 bis 20 Gewichtsteile eines modifizierten Acryl-basierten Harzes bezogen auf 100 Gewichtsteile des gemischten Harzes; wobei das modifizierte Acryl-basierte Harz ein Copolymer eines Alkyl(meth)acrylatmonomers und eines aromatischen oder cyclischen Acrylester-basierten Monomers; oder ein Copolymer eines Alkyl(meth)acrylatmonomers, eines aromatischen oder cyclischen Acrylester-basierten Monomers und eines monofunktionellen ungesättigten Monomers, das mit dem Alkyl(meth)acrylatmonomer polymerisierbar ist; oder eine Kombination davon umfasst; wobei das Alkyl(meth)acrylatmonomer in einer Menge von 30 bis 50 Gew.-% bezogen auf das Gesamtgewicht des modifizierten Acryl-basierten Harzes (B) eingeschlossen ist.

2. Polymilchsäure/Polycarbonat-Harz-Zusammensetzung nach Anspruch 1, wobei das Polycarbonatharz durch Umsetzung von Diphenolen mit einer Verbindung von Phosgen, Halogenformiat, Carbonatester oder einer Kombination davon hergestellt ist.

3. Polymilchsäure/Polycarbonat-Harz-Zusammensetzung nach Anspruch 1 oder 2, wobei das Polymilchsäureharz eine Grundeinheit, die von L-Milchsäure, D-Milchsäure, L,D-Milchsäure oder einer Kombination davon abgeleitet ist, umfasst.

4. Polymilchsäure/Polycarbonat-Harz-Zusammensetzung nach Anspruch 1, wobei das aromatische oder cyclische Acrylesterbasierte Monomer Cyclohexyl(meth)acrylat, 2-Ethylphenoxy(meth)acrylat, 2-Ethylthiophenyl(meth)acrylat, 2-Ethylaminophenyl(meth)acrylat, Phenyl(meth)acrylat, Benzyl(meth)acrylat, 2-Phenylethyl(meth)acrylat, 3-Phenylpropyl(meth)acrylat, 4-Phenylbutyl(meth)acrylat, 2-(2-Methylphenyl)ethyl(meth)acrylat, 2-(3-Methylphenyl)ethyl(meth)acrylat, 2-(4-Methylphenyl)ethyl(meth)acrylat, 2-(4-Propylphenyl)ethyl(meth)acrylat, 2-(4-(1-Methylethyl)phenyl)ethyl(meth)acrylat, 2-(4-Methoxyphenyl)ethyl(meth)acrylat, 2-(4-Cyclohexylphenyl)ethyl(meth)acrylat, 2-(2-Chlorphenyl)ethyl(meth)acrylat, 2-(3-Chlorphenyl)ethyl(meth)acrylat, 2-(4-Chlorphenyl)ethyl(meth)acrylat, 2-(4-Bromphenyl)ethyl(meth)acrylat, 2-(3-Phenylphenyl)ethyl(meth)acrylat, 2-(4-Benzylphenyl)ethyl(meth)acrylat, oder eine Kombination davon umfasst.

5. Polymilchsäure/Polycarbonat-Harz-Zusammensetzung nach Anspruch 1, wobei das mit dem Alkyl(meth)acrylatmonomer polymerisierbare, monofunktionelle ungesättigte Monomer Styrole, Nitrile, ungesättigte Carbonsäure, Säureanhydrid, Hydroxylhaltige Acrylate, Amide, Allylglycidylether, Glycidylmethacrylat oder eine Kombination davon umfasst.

6. Polymilchsäure/Polycarbonat-Harz-Zusammensetzung nach irgendeinem der Ansprüche 1 bis 5, wobei die Polymilchsäure/Polycarbonat-Harz-Zusammensetzung weiterhin 1 bis 20 Gewichtsteile eines (C) Schlagverstärkungsmittels bezogen auf 100 Gewichtsteile des gemischten Harzes umfasst.

7. Polymilchsäure/Polycarbonat-Harz-Zusammensetzung nach Anspruch 6, wobei das Schlagverstärkungsmittel ein Kern-Schale-Copolymer umfasst, das durch Propfen einer ungesättigten Verbindung eines Acryl-basierten Monomers, eines heterocyclischen Monomers, eines aromatischen Vinylmonomers, eines ungesättigten Nitrilmonomers oder einer Kombination davon, auf ein Kautschukpolymer, das durch Polymerisation eines Dienbasierten Monomers, eines Acryl-basierten Monomers, eines Silicium- bzw. Silicon-basierten Monomers oder einer Kombination davon erhalten wird, erhalten wird.

8. Formerzeugnis, erhältlich aus der Polymilchsäure/Polycarbonat-Harz-Zusammensetzung nach irgendeinem der Ansprüche 1 bis 7.

## Revendications

1. Composition de résine de poly(acide lactique)/polycarbonate, comprenant
(A) une résine mixte, comprenant (a1) 10 à 90 % en poids d'une résine de polycarbonate et (a2) 10 à 90 % en poids d'une résine de poly(acide lactique) ; et
(B) 1 à 20 pourcents en poids d'une résine à base acrylique modifiée, pour 100 parties en poids de la résine mixte ; la résine à base acrylique modifiée comprenant un copolymère d'un (méth)acrylate d'alkyle monomère, et un monomère à base acrylique de type ester cyclique ; ou un copolymère d'un (méth)acrylate d'alkyle monomère, d'un monomère à base acrylique de type ester aromatique ou cyclique, et d'un monomère insaturé monofonctionnel polymérisable avec le (méth)acrylate d'alkyle monomère ; ou une combinaison de ceux-ci ; le (méth)acrylate d'alkyle monomère étant présent en une quantité de 30 à 50 % en poids par rapport au poids total de la résine à base acrylique modifiée (B).

2. Composition de résine de poly(acide lactique)/polycarbonate selon la revendication 1, dans laquelle la résine de polycarbonate est préparée par réaction de diphénols avec un composé du phosgène, d'un halogénoformiate, d'un ester carbonate ou d'une combinaison de ceux-ci.

3. Composition de résine de poly(acide lactique)/polycarbonate selon la revendication 1 ou 2, dans laquelle la résine de poly(acide lactique) comprend une unité répétitive qui dérive de l'acide L-lactique, de l'acide D-lactique, de l'acide L,D-lactique ou d'une combinaison de ceux-ci.

4. Composition de résine de poly(acide lactique)/polycarbonate selon la revendication 1, dans laquelle le monomère à base acrylique de type ester aromatique ou cyclique comprend le (méth)acrylate de cyclohexyle, le (méth)acrylate de 2-éthylphénoxy, le (méth)acrylate de 2-éthylthiophényle, le (méth)acrylate de 2-éthylaminophényle, le (méth)acrylate de phényle, le (méth)acrylate de benzyle, le (méth)acrylate de 2-phényléthyle, le (méth)acrylate de 3-phénylpropyle, le (méth)acrylate de 4-phénylbutyle, le (méth)acrylate de 2-(2-méthylphényl)éthyle, le (méth)acrylate de 2-(3-méthylphényl)éthyle, le (méth)acrylate de 2-(4-méthylphényl)éthyle, le (méth)acrylate de 2-(4-propylphényl)éthyle, le (méth)acrylate de 2-(4-(1-méthyléthyl)phényl)éthyle, le (méth)acrylate de 2-(4-méthoxyphényl)éthyle, le (méth)acrylate de 2-(4-cyclohexylphényl)éthyle, le (méth)acrylate de 2-(2-chlorophényl)éthyle, le (méth)acrylate de 2-(3-chlorophényl)éthyle, le (méth)acrylate de 2-(4-chlorophényl)éthyle, le (méth)acrylate de 2-(4-bromophényl)éthyle, le (méth)acrylate de 2-(3-phénylphényl)éthyle, le (méth)acrylate de 2-(4-benzylphényl)éthyle, ou une combinaison de ceux-ci.

5. Composition de résine de poly(acide lactique)/polycarbonate selon la revendication 1, dans laquelle le monomère insaturé monofonctionnel polymérisable avec le (méth)acrylate d'alkyle monomère comprend les styrènes, les nitriles, un acide carboxylique insaturé, un anhydride d'acide, des acrylates hydroxylés, des amides, l'allylglycidyléther, le méthacrylate de glycidyle ou une combinaison de ceux-ci.

6. Composition de résine de poly(acide lactique)/polycarbonate selon l'une quelconque des revendications 1 à 5, la composition de résine de poly(acide lactique)/polycarbonate comprenant en outre 1 à 20 parties en poids de (C) un agent renforçant la résistance au choc, pour 100 parties en poids de la résine mixte.

7. Composition de résine de poly(acide lactique)/polycarbonate selon la revendication 6, dans laquelle l'agent renforçant la résistance au choc comprend un copolymère coeur/gaine obtenu par greffage d'un composé insaturé d'un monomère à base acrylique, d'un monomère hétérocyclique, d'un monomère vinylaromatique, d'un nitrile insaturé monomère ou d'une combinaison de ceux-ci, sur un polymère de type caoutchouc obtenu par polymérisation d'un monomère à base diénique, d'un monomère à base acrylique, d'un monomère à base de silicium, ou d'une combinaison de ceux-ci.

8. Produit moulé, pouvant être obtenu à partir de la composition de résine de poly(acide lactique)/ polycarbonate selon l'une quelconque des revendications 1 à 7.
